(19) Europäisches Patentamt
European Patent Office
Office européen des brevets

(11) Veröffentlichungsnummer : **0 200 185**
**B1**

(12) # EUROPÄISCHE PATENTSCHRIFT

(45) Veröffentlichungstag der Patentschrift : **30.11.88**

(21) Anmeldenummer : **86105796.6**

(22) Anmeldetag : **26.04.86**

(51) Int. Cl.$^4$ : **C 08 L 87/00**, C 08 L 71/04, C 08 L 25/12

(54) **Thermoplastische Formmasse.**

(30) Priorität : **02.05.85 DE 3515638**

(43) Veröffentlichungstag der Anmeldung : **10.12.86 Patentblatt 86/45**

(45) Bekanntmachung des Hinweises auf die Patenterteilung : **30.11.88 Patentblatt 88/48**

(84) Benannte Vertragsstaaten : **BE DE FR GB NL**

(56) Entgegenhaltungen :
**EP-A- 0 170 946**
**EP-A- 0 172 516**

(73) Patentinhaber : **BASF Aktiengesellschaft**
**Carl-Bosch-Strasse 38**
**D-6700 Ludwigshafen (DE)**

(72) Erfinder : **Taubitz, Christof, Dr.**
**In der Dreispitz 15**
**D-6706 Wachenheim (DE)**
Erfinder : **Seiler, Erhard, Dr.**
**Erpolzheimer Strasse 1**
**D-6700 Ludwigshafen (DE)**
Erfinder : **Hambrecht, Jürgen, Dr.**
**Am Klosterwald 31**
**D-4400 Münster-Hiltrup (DE)**
Erfinder : **Münch, Volker, Dr.**
**Luitpoldstrasse 114**
**D-6700 Ludwigshafen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 200 185 B1

**Beschreibung**

Die Erfindung betrifft eine thermoplastische Formmasse auf der Grundlage von Styrol-Acrylnitril-Copolymerisaten, Polyphenylenethern und Copolymeren (Kammpolymere).

Zum Stand der Technik nennen wir :

(1) US-PS 3 383 435
(2) US-PS 4 128 602
(3) US-PS 4 128 603
(4) US-PS 4 360 618
(5) US-PS 4 387 189 ≙ EP 48 391
(6) Deutsche Patentanmeldung P 34 27 405.7 ≙ EP-A-170946
(7) Deutsche Patentanmeldung P 34 31 268.4 ≙ EP-A-172516

Thermoplastische Formmassen, die Mischungen aus Styrol enthaltenden Polymerisaten, wie Polystyrol, schlagfestes Polystyrol S/AN-Copolymerisate ABS und Polyphenylenether enthalten, sind aus (1), (2) und (3) bekannt. Solche Formmassen eignen sich zur Herstellung von Formteilen, die im Vergleich zu solchen Formteilen, die nur das Styrolpolymerisat, aber nicht Polyphenylenether enthalten, eine bessere Wärmeformbeständigkeit haben. Formmassen, die Polyphenylenether und Styrol-Acrylnitril-Copolymerisate, die SAN- oder ABS-Polymerisate enthalten, haben sich bislang nicht durchgesetzt, da aufgrund von mangelnder Verträglichkeit mit dem Mischungspartner die Eigenschaften der Formkörper weit unter den erwarteten Werten liegen. Es ist daher in (4) eine Lösung vorgeschlagen worden, Styrolpolymerisate, die nur 2 bis 8 Gew.% Acrylnitril einpolymerisiert enthalten, zur Herstellung von Formteilen zu verwenden. Doch zeigt sich, daß schon bei höheren Acrylnitrilgehalten, die über 8,5 % liegen, eine Unverträglichkeit mit dem Polyphenylenether auftritt, so daß Formkörper mit schlechten mechanischen Werten aus derartigen Mischungen enthalten werden.

In (5) wird vorgeschlagen Styrolpolymerisate, die Säure-, Säureanhydrid- oder Säurechloridgruppen enthalten, mit den endständigen OH-Gruppen von Polyphenylenethern umzusetzen. Derartige Umsetzungsprodukte können mit Styrolpolymerisaten und Polyphenylenethern gemischt werden, wobei aus derartigen Formmassen Formkörper mit verbesserten mechanischen Eigenschaften hergestellt werden können. Es zeigte sich jedoch, daß derartige Formmassen noch nicht voll befriedigen. Nachteilig ist die Verwendung eines speziellen Styrolpolymerisats, welches die Säure-Gruppen enthält.

In (6) werden Mischungen auf Grundlage von Styrol-Acrylnitril-Copolymeren und von Polyphenylenethern beschrieben, die zusätzlich als Verträglichmacher Polymere (Kammpolymere) der allgemeinen Formel

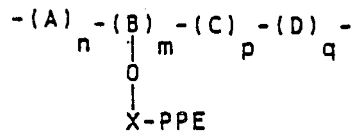

aufweisen.

In der Regel stellen dar A ein einpolymerisiertes vinylaromatisches Monomeres, B ein einpolymerisiertes ursprünglich Hydroxylgruppen enthaltendes Monomeres, C ein einpolymerisiertes Nitril-Monomeres und D ein einpolymerisiertes anderes Monomeres als die zu A, B oder C führenden Monomeren darstellt, wobei die Einheiten A, B, C und D statistisch, alternierend und/oder blockartig in der Hauptkette verteilt sind und wobei n, p und q gleich 0 oder eine ganze Zahl und m eine ganze Zahl sein kann und X der Rest eines mindestens bifunktionellen Kopplungsmittels ist und PPE einen über ein endständiges Sauerstoffatom gebundenen Polyphenyletherrest bedeutet.

In (7) schließlich sind Polymere (Kammpolymere) besonderer Art beschrieben.

Vorteilhaft ist, daß das Kammpolymere in geringen Mengen mit üblichen Styrol-Acrylnitril-Copolymeren und Polyphenylenethern kombiniert werden kann. Nachteilig ist die nicht immer ausreichende Hydrolysebeständigkeit z. B. der aus (6) bekannten Formmassen gegenüber Wasser, Säuren und Laugen sowie die mangelnde Chemikalienbeständigkeit.

Der vorliegenden Erfindung liegt daher die Aufgabe zugrunde, thermoplastische Formmassen auf der Grundlage von Styrol-Acrylnitril-Copolymerisaten, Polyphenylenethern und Kammpolymeren zu schaffen, die zu Formteilen mit guten mechanischen Eigenschaften verarbeitet werden können, die sich zusätzlich durch hervorragende Hydrolysebeständigkeit auszeichnen.

Diese Aufgabe wird gelöst durch eine thermoplastische Formmasse gemäß Patentanspruch 1.

Die Erfindung betrifft daher eine thermoplastische Formmasse, enthaltend

A. 90 bis 10 Gew.-Teile mindestens eines Styrol und Acrylnitril enthaltenden Copolymerisats,

B. 10 bis 90 Gew.-Teile mindestens eines Poly(phenylenethers), enthaltend ferner, bezogen auf 100 Gew.-Teile A + B,

C. 0,1 bis 90 Gew.-Teile mindestens eines Copolymeren (Kammpolymeren), aufgebaut aus einer Hauptkette und mindestens einer Seitenkette,

dadurch gekennzeichnet, daß das Kammpolymere bei Durchschnittsmolekulargewichten (Gewichtsmittel $\bar{M}_w$) von 1 000 bis 2 Millionen, einpolymerisiert enthält, die Struktureinheiten der allgemeinen Formeln (I) :

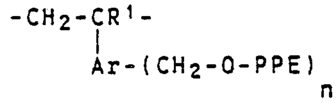
(I)

(II):

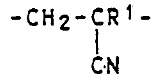
(II)

und (III)

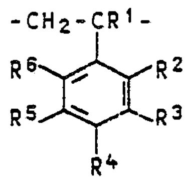

worin stehen für $R^1$ = Wasserstoff oder einen Methylrest, Ar = ein gegebenenfalls mit Alkyl- und/oder Arylresten substituierten aromatischen Rest mit 6 bis 14 C-Atomen, PPE = einen gegebenenfalls substituierten Poly(phenylenether) rest mit $\bar{M}_w$ von 500 bis 90 000, n eine ganze Zahl von 1 bis 3, $R^2$ bis $R^6$ = Wasserstoff, $C_1$-$C_8$-Alkyl, Halogen, $-CH_2-Cl$, $-CH_2OH$ oder $-CH_2R^7$ und $R^7$ = für einen organischen oder Phosphor-organischen Rest.

Nachstehend wird der Aufbau der erfindungsgemäßen Formmasse aus den Komponenten, die Herstellung der Komponenten und die der Formmasse beschrieben.

Die erfingungsgemäße Formmasse ist aufgebaut aus den Komponenten A, B und C, vorzugsweise besteht sie aus diesen.

Die erfindungsgemäße Formmasse enthält (besteht vorzugsweise aus)

90 bis 10 Gew.-Teile(n), vorzugsweise 75 bis 20 Gew.-Teile(n) der Komponente A

10 bis 90 Gew.-Teile(n), vorzugsweise 20 bis 75 Gew.-Teile(n) der Komponente B und, bezogen auf 100 Gew.-Teile A + B

0,1 bis 90 Gew.-Teile(n), vorzugsweise 1 bis 20 Gew.-Teile der Komponente C.

Die Formmasse kann außerdem übliche Zusatzstoffe D enthalten, deren Art und Menge von dem beabsichtigten Verwendungszweck abhängen.

Unter thermoplastischen Formmassen im Sinne der vorliegenden Erfindung sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Komponente A

Unter Styrol-Acrylnitril-Copolymerisaten sollen im Rahmen dieser Erfindung sogenannte S/AN-, ABS- und ASA-Polymerisate verstanden werden. S/AN-Polymerisate sind Copolymere aus monovinylaromatischen Monomeren und Nitrilmonomeren. Die vinylaromatischen Monomeren können Styrol oder alpha-Methylstyrol, p-Methylstyrol, Halogenstyrole wie Chlorstyrol oder ortho-Ethylstyrol oder Gemische dieser Monomeren sein. Bevorzugt ist jedoch Styrol. Von den Acrylnitrilmonomeren, die in dem SAN-Polymerisat in Mengen von 9 bis 40 Gew.% einpolymerisiert sind, kommen vor allem Acrylnitril oder Methacrylnitril in Frage. Die S/AN-Polymerisate können außer den genannten Monomeren noch bis zu 20 % Monomere wie Methacrylsäureester, Acrylsäureester, z. B. Methylmethacrylat oder Ethylmethacrylat, aber auch Butylacrylat oder 2-Ethyl-hexylacrylat sowie Methacrylamide oder Acrylamide oder Gemische dieser Verbindungen einpolymerisiert enthalten. Bevorzugt sind jedoch die S/AN-Polymerisate, die lediglich Styrol- und Acrylnitril-Monomeren einpolymerisiert enthalten.

Zu den Styrol- und Acrylnitril enthaltenden Copolymerisaten gehören auch die vorstehend genannten ABS-Polymerisate, die eine Weichkomponente aus mit Styrol und Acrylnitril gepfropften Butadienpolymerisaten enthalten. Die Weichkomponente kann auch aus gepfropftem EPDM oder einem Polypentamerkautschuk bestehen. ASA-Polymerisate enthalten einen gepfropften Acrylat-Kautschuk. ABS- bzw. ASA-Polymerisate sind bekannt. Sie sind z. B. in dem Buch von C.B. Bucknall « Toughened Plastics », Applied Science Publ., London (1977), S. 66-105, beschrieben. Man kann aber auch die Styrol-Acrylnitril-Polymerisate, z. B. die SAN-Polymerisate, mit Kautschuk abmischen und verwendet dabei Kautschuk mit einer Glastemperatur von unter 0 °C. Die Kautschuke können statistische Copolymerisate oder Blockpolymerisate sein und bevorzugt sind Styrol-Butadien-, Styrol-Isopren-Blockpolymerisate, bei denen gegebenenfalls die Dien-Komponente hydriert sein kann. Man mischt den Styrolacrylnitrilpolymerisaten zweckmäßig Kautschuk in solchen Mengen zu, daß die Mischung 3 bis 40 Gew.% des Kautschuks enthält. Man kann den Kautschuk auch zuerst mit anderen Teilen der Gesamtmischung, z. B. dem Polyphenylenoxid, abmischen oder der erfindungsgemäßen Abmischung zugeben.

Die Herstellung von S/AN-Copolymerisaten, ebenso die von ABS und ASA-Polymerisaten ist dem Fachmann geläufig. Sie sind im Handel erhältlich.

Komponente B

Die in der erfindungsgemäßen Formmasse als Komponente B enthaltenen Polyphenylenether (PPE) werden nach bekannten Verfahren aus in ortho-Position disubstituierten Phenolen durch oxidative Kupplung hergestellt. Dabei sollen mindestens 20 Einheiten miteinander verknüpft sein.

Beispielhaft seien genannt : Poly (2,5-dilauryl-1,4-phenylen) oxid, Poly (diphenyl-1,4-phenylen) oxid, Poly (2,6-dimethoxy-1,4-phenylen) oxid, Poly (2,6-diethoxy-1,4-polyphenylen) oxid, Poly (2-methoxy-6-ethoxy-1,4-phenylen) oxid, Poly (2-ethyl-6-stearyloxy-1,4-phenylen) oxid, Poly (2,6-dichlor-1,4-phenylen) oxid, Poly (2-methyl-6-phenyl-1,4-phenylen) oxid, Poly (2,6-dibenzyl-1,4-phenylen) oxid, Poly (2-ethoxy-1,4-phenylen) oxid, Poly (2-chlor-1,4-phenylen) oxid, Poly (2,5-dibrom-1,4-phenylen) oxid. Ebenfalls geeignet sind Copolymere von verschiedenen Phenolen, wie 2,6-Dimethylphenol und 2,3,6-Trimethylphenol.

Besonders bevorzugt für die erfindungsgemäßen Abmischungen sind solche, bei denen die Substituenten Alkyle mit 1 bis 4 C-Atomen sind, wie Poly (2,6-dimethyl-1,4-phenylen) oxid, Poly (2,6-diethyl-1,4-phenylen)-oxid, Poly (2-methyl-6-ethyl-1,4-polyphenylen) oxid, Poly (2-methyl-6-propyl-1,4-polyphenylen) oxid, Poly (2,6-dipropyl-1,4-phenylen) oxid und Poly (2-ethyl-6-propyl-1,4-phenylen) oxid.

Die Herstellung die Eigenschaften von PPE sind dem Fachmann bekannt. Das PPE kann teilweise durch Polystyrol oder schlagfestes Polystyrol ersetzt sein.

Komponente C

Die Komponente C der erfindungsgemäßen Formmasse fungiert als Verträglichkeitsvermittler zwischen A und B. Es ist ein Copolymeres, das als Kammpolymeres bezeichnet wird, und aus einer Hauptkette und mindestens einer Seitenkette aufgebaut ist.

Die Komponente C enthält Struktureinheiten bzw. Strukturelemente der eingangs gekennzeichneten allgemeinen Formeln (I), (II) und (III) einpolymerisiert. Es handelt sich bei der Komponente C somit um makromolekulare Stoffe, die ganz, im wesentlichen oder teilweise aus wiederkehrenden Einheiten der Formeln (I), (II) und (III) bestehen, worin der Formelteil [$—CH_2—CR^1—$] ein Teil der Hauptkette ist. Die Polymeren enthalten in den (der) Seitenkette(n) als Substituenten die $—Ar(—CH_2—O—PPE)_n$ und CN-Reste. Die Komponente C besteht entweder aus Copolymeren, welche nur die oben angeführten Struktureinheiten (I), (II) und (III) enthalten oder aus Copolymeren, die neben den genannten Struktureinheiten noch andere Strukturelemente enthalten, die sich von anderen copolymerisierbaren olefinisch ungesättigten Verbindungen ableiten. Alle einpolymerisierten Struktureinheiten können statistisch, d. h. beliebig über die Hauptkette verteilt, alternierend und/oder blockartig im Copolymeren der Hauptkette verteilt sein. Derartige Anordnungen von Monomereinheiten in Copolymeren sind an sich bekannt, so daß sich eine weitere Erläuterung erübrigt.

In der Struktureinheit der allgemeinen Formel (I)

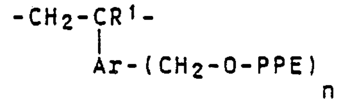

(I)

bedeutet $R^1$ Wasserstoff oder einen Methylrest. Der Formelteil Ar bedeutet einen gegebenenfalls mit Alkyl- und/oder Arylresten substituierten aromatischen Rest mit 6 bis 14 C-Atomen, wobei ein Phenylenrest bevorzugt ist. Als gegebenenfalls alkylierte und/oder arylierte aromatische Reste kommen insbesondere solche der allgemeinen Formel

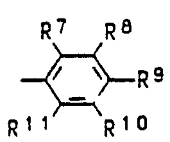

in Betracht, wobei $R^7$, $R^8$, $R^9$, $R^{10}$ und $R^{11}$ bevorzugt Wasserstoff, Methyl, Ethyl oder Phenyl ist und mindestens ein Rest, höchstens aber drei Reste, die allgemeine Formel —$CH_2$—O—PPE haben. Bevorzugt sind ein oder zwei PPE—O—$CH_2$—Reste im aromatischen Rest Ar vorhanden. Der in der Seitenkette der Struktureinheit (I) befindliche Formteil O—PPE bedeutet dabei ein Poly (phenylenether) rest. Die Polyphenylenether, auch Polyphenylenoxide genannt, werden nach den bekannten Verfahren aus den entsprechenden Phenolen durch oxidative Kupplung hergestellt (vgl. US-Patente 3 306 879, 3 914 266, 3 956 442, 2 965 069, 3 972 851, 3 496 236, 3 367 978 und 4 140 675, dies gilt auch für die Komponente B).

Bevorzugte Polyphenylenether haben die allgemeine Formel

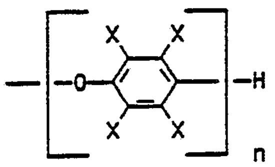

wobei n eine positive Zahl und vorzugsweise 20 bis 200 und X ein monovalenter Substituent wie Wasserstoff, Halogen, Kohlenwasserstoff oder Halogenkohlenwasserstoff mit mindestens 2-Kohlenstoffatomen zwischen dem Halogenatom und dem Phenylkern ist. Das Molekulargewicht (Gewichtsmittel $\bar{M}_w$) des Polyphenylenetherrestes beträgt, bestimmt nach der nachstehend noch (S. 10) angegebenen Methode, 500 bis 90 000, bevorzugt 10 000 bis 70 000.

Die Seitenketten bestehen bevorzugt aus :

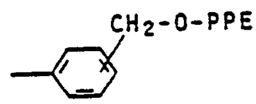

wobei für PPE beispielhaft genannt seien :

Poly (2,5-dilauryl-1,4-phenylen) ether, Poly (2,6-diphenyl-1,4-phenylen) ether, Poly (2,6-dimethoxy-1,4-phenylen) ether, Poly (2,6-diethoxy-1,4-polyphenylen) ether, Poly (2-methoxy-6-ethoxy-1,4-phenylen) ether, Poly (2-ethyl-6-stearyloxy-1,4-phenylen) ether, Poly (2,6-dichlor-1,4-phenylen) ether, Poly (2-methyl-6-phenyl-1,4-phenylen) ether, Poly (2,6-dibenzyl-1,4-phenylen) ether, Poly (2-ethoxy-1,4-phenylen) ether, Poly (2-chlor-1,4-phenylen) ether, Poly (2,5-dibrom-1,4-phenylen) ether. Ebenfalls geeignet sind Copolymere von verschiedenen Phenolen, wie 2,6-Dimethylphenol und 2,3,6-Trimethylphenol. Besonders bevorzugt sind Poly (2,6-dimethyl-1,4-phenylen) ether, Poly (2,6-diethyl-1,4-phenylen) ether, Poly (2-methyl-6-ethyl-1,4-phenylen) ether, Poly (2-methyl-6-propyl-1,4-phenylen) ether, Poly (2,6-dipropyl-1,4-phenylen) ether und Poly (2-ethyl-6-propyl-1,4-phenylen) ether. Insbesondere bevorzugt sind Polymere, bei denen PPE ein Poly (2,6-dimethyl-1,4-phenylen) ether und $R^1$ Wasserstoff ist.

Die Struktureinheit der allgemeinen Formel (I) ist, bezogen auf die Komponente C, in Mengen von 0,05 bis 99, besonders bevorzugt von 0,5 bis 20 Gew.% enthalten.

Bei der in den polymeren Einheiten der Hauptkette vorhandenen Einheit (II)

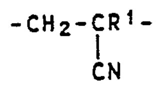

(II)

handelt es sich um einpolymerisierte, Nitrilgruppen enthaltende Monomere, wobei $R^1$ = H oder ein Methylrest ist, d. h. bevorzugt handelt es sich um Acrylnitril oder Methacrylnitril. Die Struktureinheit der allgemeinen Formel (II) ist bezogen auf die Komponente C, bevorzugt in Mengen von 1 bis 45 Gew.%, insbesondere 8 bis 40 Gew.% enthalten.

Bei der in den polymeren Einheiten der Hauptkette vorhandenen Einheit (III) handelt es sich um einpolymerisierte (ursprünglich olefinisch ungesättigte olefin. Monomere) Einheiten

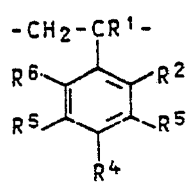

(III)

worin $R^1$ die oben angegebene Bedeutung hat und $R^2$ bis $R^6$ Wasserstoff, $C_1$-$C_8$-Alkyl, Halogen, $-CH_2Cl$, $-CH_2OH$ oder $-CH_2O-R^7$ bedeutet, wobei $R^7$ = ein organischer oder Phosphor-organischer Rest ist.

Die Struktureinheit III ist, bezogen auf die Komponente C, in Mengen von 1 bis 99 Gew.%, vorzugsweise von 50 bis 95 Gew.% enthalten.

Eine bevorzugte Komponente besteht aus 0,5 bis 10 Gew.% der Einheit (I), 8 bis 40 Gew.% der Einheit (II) und 50 bis 91,5 Gew.% der Einheit (III).

Besser geeignet für Berechnungen sind die Mol-Anteile.

Die Struktureinheiten (I) sind in Mol-Mengen von 0,01 bis 20 %, vorzugsweise 0,1 bis 10 %, die Struktureinheiten (II) in Mol-Mengen von 5 bis 50 %, vorzugsweise 15 bis 30 %, die Struktureinheiten (III) in Mol Mengen, vorzugsweise von 96 bis 40 % im Gesamtpolymeren enthalten.

Die Komponente C kann zusätzlich noch andere Strukturelemente, IV, enthalten, die von einer oder mehreren copolymerisierbaren olefinisch ungesättigten Verbindungen abstammen. Diese Struktureinheiten sind im Polymeren C bevorzugt in Mengen von bis zu 20 Gew.% enthalten. Sie leiten sich bevorzugt ab von den Monomeren (Meth) acrylsäureester aus Alkanolen, (Meth) acrylamiden, Dienen wie Butadien, Dimethylbutadien oder Isopren. Die Prozentzahlen aller Struktureinheiten im Polymeren C sollen sich zu 100 addieren.

Die Komponente C soll ein Durchschnittsmolekulargewicht von 10 000 bis 2 000 000, vorzugsweise von 40 000 bis 300 000 aufweisen. Der Polyphenylenether ist in den Polymerisaten mit den Struktureinheiten (I), (II), (III) und (IV) vorzugsweise mit 20 bis 80 Gew.% enthalten, das Gewichtsverhältnis von III zu II beträgt vorzugsweise 90 : 10 bis 60 : 40.

Die Zusammensetzung der Hauptkette des Polymeren wird bevorzugt an die Zusammensetzung des Styrol-Acrylnitril-Polymeren (Komponente A) angepaßt. So ist es vorteilhaft, bei hohen (20 bis 40 Gew.%) Gehalten an ungesättigten Nitrilmonomeren im Styrol-Acrylnitril-Copolymeren den Gehalt an Nitrilmonomeren in der Hauptkette des Kammpolymeren ähnlich hoch zu wählen.

Die Komponente C kann auf verschiedenen Wegen hergestellt werden (vgl. insbesondere deutsche Patentanmeldung P 34312684.

Die Polymerisation zur Bildung der Hauptkette kann insbesondere nach den üblichen Verfahren durchgeführt werden, so in Lösung, Suspension, Emulsion oder in der Masse.

Komponente D

Die erfindungsgemäße Formmasse kann außerdem gummiartige, hochmolekulare Polymere, Weichmacher und Verarbeitungshilfsmittel enthalten, weiterhin Stabilisatoren und Antioxidantien.

Andere bekannte Zusätze sind Glasfasern, Glaskugeln, Kaolin, Quarz, Glimmer, Wollastonit, Talkum, Asbest, Titandioxid, Aluminiumoxid, Micobit, Kreide, calciniertes Aluminiumsilikat, Farbstoffe und Pigmente.

Die erfindungsgemäße Formmasse zeichnet sich durch verbesserte Beständigkeit gegenüber sauren und alkalischen Medien aus.

Die erfindungsgemäße Formmasse zeichnet sich durch außerordentlich gute mechanische Eigenschaften aus. Besonders bei Acrylnitril-Gehalten über 9 Gew.% im Styrol-Acrylnitrilcopolymeren (Komponente A) zeigen die erfindungsgemäßen Formmassen überraschend hohe mechanische Werte, verglichen mit denen von Mischungen, die kein Kammpolymeres enthalten. Dies zeigt besonders ein Vergleich, mit den Proben der Vergleichsversuche 4 bis 7 von (4). Besonders Zugfestigkeit und Kerbschlagzähigkeit zeigen außerordentlich bemerkenswerte Verbesserungen gegenüber den Abmischungen ohne Kammpolymeres. Überraschend ist der geringe Anteil an Kammpolymeren, der den erfindungsgemäßen Formmassen zugesetzt werden muß. Dies ist besonders vorteilhaft, da die Hauptbestandteile der erfindungsgemäßen Formmasse aus handelsüblichen Polyphenylenethern und ABS- oder SAN-Polymeren bestehen können. Durch den hohen Acrylnitrilgehalt, der bei den erfindungsgemäßen Formmassen eingesetzt werden kann, ist eine verbesserte Lösungsmittelbeständigkeit gegenüber Abmischungen aus nur Polyphenylenethern und Polystyrol offensichtlich.

Herstellung der Formmasse

Die Herstellung der Formmasse kann nach bekannten Verfahren durch Mischen erfolgen. Bevorzugt werden die Komponenten A, B und C gegebenenfalls mit den Zusatzstoffen trocken vermischt, falls die Komponenten bezogen werden. Vorzugsweise geschieht das Mischen der Komponenten A, B und C durch gemeinsames Extrudieren, Kneten oder Verwalzen der Komponenten. Die in wäßriger Dispersion erhaltenen Produkte der Pfropfmischpolymerisation [Komponente A = ABS, ASA] können aber auch teilweise entwässert oder direkt als Dispersion mit der Komponente B und der Komponente C oder deren Dispersion vermischt werden, wobei dann während des Vermischens die vollständige Trocknung des Pfropfmischpolymerisats erfolgt.

Die erfindungsgemäße Formmasse kann nach den bekannten Verfahren der Thermoplastverarbeitung verarbeitet werden, also z. B. durch Extrudieren, Spritzgießen, Kalandrieren, Hohlkörperblasen,

Pressen oder Sintern ; besonders bevorzugt werden aus den erfindungsgemäßen Formmassen Formteile durch Spritzgießen hergestellt.

Die in den Beispielen und Versuchen beschriebenen Parameter wurden wie folgt bestimmt :

1. Das Gewichtsmittel des Molgewichts $\bar{M}_w$ wurde gemessen durch Gelpermeations-Chromatographie in 0,25 %iger Tetrahydrofuranlösung bei 23 °C und einer Durchflußgeschwindigkeit von 1,2 ml/min (vgl. G. Glöckner, « Polymercharakterisierung durch Flüssigkeits-Chromatographie », Verlag A. Hüttig, Heidelberg, 1982).
2. Zugfestigkeit in [N/mm²] nach DIN 53 455
3. Kerbschlagzähigkeit $a_k$ in [kJ/m²] nach DIN 53 453
4. Wärmeformbeständigkeit nach Vicat, °C, nach DIN 53 460.
5. Die Transparenz wurde visuell bewertet

Note 1 transparent
Note 2 schwach trüb
Note 3 trüb

Für die Herstellung von erfindungsgemäßen Formmassen und von Proben für Vergleichszwecke werden die nachstehend beschriebenen Produkte verwendet.

Vertreter der Komponente A

$A_I$ S/AN Copolymerisat mit 65 Gew.%, 35 Gew.% AN (Molgewicht $\bar{M}_w$ = 150 000)

$A_{II}$ S/AN Copolymerisat mit 75 Gew.% Styrol und 25 Gew.% AN (Molgewicht $\bar{M}_w$ = 210 000)

$A_{III}$ ABS-, Polybutadienkautschuk 49 Teile/60 Teile SAN-Copolymerisat mit 85 Gew.% Styrol und 35 Gew.% AN als Pfropfhülle.

Vertreter der Komponente B

B Poly-(2,6-dimethyl-1,4-phenylen) ether (Molekulargewicht $\bar{M}_w$ = 45 000)

Vertreter der Komponente C

$C_I$ Durch kontinuierliche thermische Polymerisation von 58 Tl. Styrol, 37 Tl. Acrylnitril, 3 Tl. m-Chlormethyl-styrol und 2 Tl. p-Chlormethylstyrol stellt man unter Zusatz von 35 Tl. Ethylbenzol bei 140 °C und 8 bar bei 6 h Verweilzeit ein statistisch verteiltes Copolymeres mit $\bar{M}_w$ = 42 000 her. Die Mischung wird über einen Extruder entgast und als Granulat gewonnen. 100 Tl. des Polymeren gibt man in 1 500 Tl. Toluol, anschließend fügt man 80 Tl., PPE (hergestellt gemäß US-PAT 3 914 226 mit einem Molekulargewicht $\bar{M}_w$ = 36 000) hinzu und erwärmt auf 90 °C. Man kühlt auf 30 °C und fügt sofort 50 Tl. einer 50 %igen wäßrigen Natronlauge zu und rührt stark. Nach 5 Min. gibt man 5 Tl. Tetrabutylammoniumhydrogensulfat zu und rührt 4 h bei 30 °C, anschließend erwärmt man in 1 h auf 60 °C. Man hält die Reaktion 1 h bei 60 °C und fügt 600 Tl. Wasser und 40 Tl. Essigsäure hinzu. Die Wasserphase wird abgetrennt, die Zugabe von 600 Tl. Wasser 2 mal wiederholt und jeweils abgetrennt. Die Lösung wird aufkonzentriert und über einen Extruder entgast.

$C_{II}$ Man polymerisiert wie unter $C_I$ beschrieben 70,5 Tl. Styrol, 25 Tl. Acrylnitril, 27 Tl. m-Chlormethylstyrol und 1,8 Tl. p-Chlormethylstyrol unter Zusatz von 20 Tl. Ethylbenzol zu einem Copolymeren mit $\bar{M}_w$ = 46 000 und setzt dieses mit 100 Tl. PPE um.

$C_{III}$ Man polymerisiert, wie unter $C_I$ beschrieben 70 Tl. Styrol, 25 Tl. Acrylnitril, 3 Tl. m-Chlormethylstyrol, 2 Tl. p-Chlormethyl-styrol und 5- Tl. Methylmethacrylat unter Zusatz von 20 Tl. Ethylenbzol bei 145 °C und 9 bar bei 5 h Verweilzeit zu einem Copolymerisat mit $\bar{M}_w$ = 38 000 und setzt dieses mit 85 Teilen eines PPE mit einem $\bar{M}_w$ = 43 000 um.

$C_{IV}$ Wie unter $C_I$ beschrieben, polymerisiert man 55,5 Tl. Styrol, 5 Tl. p-Methylstyrol, 35 Tl. Acrylnitril, 2,7 Tl. m-Chlorethyl-styrol und 1,8 Tl. p-Chlormethyl-styrol unter Zusatz von 35 Tl. Ethylbenzol bei 140 °C unter 8 bar bei 7 h Verweilzeit zu einem Copolymeren mit $\bar{M}_w$ = 54 000 und setzt dieses mit 60 Teilen PPE mit einem $\bar{M}_w$ = 31 000 um.

## Beispiele 1 bis 13 und Vergleichsversuche A bis C

Die in der Tabelle 1 genannten Mischungen aus den Komponenten $A_n$, $B_n$ mit (und ohne) $C_n$ wurden als Pulver bei 250 °C auf einem Zweischneckenextruder gemischt, geknetet und dann granuliert. Aus dem Granulat wurden Proben für Formmassen hergestellt, an denen die in der Tabelle 2 genannten Eigenschaften bestimmt wurden.

Tabelle 1

| Beispiele | Zusammensetzung der Formmasse | | | | |
|---|---|---|---|---|---|
| | Komponente A | | Komponente B | Komponente C | |
| | Art | Teile | | Art | Teile |
| 1 | $A_{II}$ | 50 | 50 | $C_{II}$ | 5 |
| 2 | $A_{II}$ | 50 | 50 | $C_{II}$ | 10 |
| 3 | $A_{II}$ | 50 | 50 | $C_{II}$ | 15 |
| 4 | $A_{II}$ | 50 | 50 | $C_{II}$ | 20 |
| 5 | $A_{I}$ | 50 | 50 | $C_{I}$ | 10 |
| 6 | $A_{I}$ | 50 | 50 | $C_{II}$ | 10 |
| 7 | $A_{I}$ | 50 | 50 | $C_{IV}$ | 10 |
| 8 | $A_{I}$ | 20 | 80 | $C_{I}$ | 10 |
| 9 | $A_{I}$ | 30 | 70 | $C_{IV}$ | 10 |
| 10 | $A_{III}$ | 50 | 50 | $C_{I}$ | 5 |
| 11 | $A_{III}$ | 50 | 50 | $C_{I}$ | 10 |
| 12 | $A_{III}$ | 50 | 50 | $C_{IV}$ | 10 |
| 13 | $A_{III}$ | 50 | 50 | $C_{II}$ | 10 |
| A | $A_{II}$ | 50 | 50 | - | - |
| B | $A_{I}$ | 50 | 50 | - | - |
| C | $A_{III}$ | 50 | 50 | - | - |

(Siehe Tabelle 2 Seite 9 f.)

Tabelle 2

| Beispiel | Zugfestigkeit | Kerbschlkagzähigkeit | Wärmeformbeständigkeit °C | Transparenz Note |
|---|---|---|---|---|
| 1 | 45 | 5 | 130 | 2 |
| 2 | 50 | 6 | 140 | 1 |
| 3 | 50 | 6 | 140 | 1 |
| 4 | 48 | 7 | 138 | 1 |
| 5 | 46 | 7 | 132 | 1 |
| 6 | 39 | 4 | 110 | 1 |
| 7 | 53 | 6 | 131 | 1 |
| 8 | 51 | 7 | 145 | 2 |
| 9 | 55 | 6 | 140 | 2 |
| 10 | 47 | 7 | 127 | 1 |
| 11 | 49 | 8 | 132 | 1 |
| 12 | 53 | 8 | 125 | 2 |
| 13 | 38 | 4 | 110 | 2 |
| A | 30 | 1 | 102 | 3 |
| B | 34 | 2 | 105 | 3 |
| C | 25 | 2 | 97 | 3 |

**Patentansprüche**

1. Thermoplastische Formmasse, enthaltend

A. 90 bis 10 Gew.-Teile mindestens eines Styrol und Acrylnitril enthaltenden Copolymerisats,

B. 10 bis 90 Gew.-Teile mindestens eines Poly (phenylenethers), enthaltend ferner, bezogen auf 100 Gew.-Teile A + B,

C. 0,1 bis 90 Gew.-Teile mindestens eines Copolymeren (Kammpolymeren), aufgebaut aus einer Hauptkette und mindestens einer Seitenkette,

dadurch gekennzeichnet, daß das Kammpolymere, bei Durchschnittsmolekulargewichten (Gewichtsmittel $\bar{M}_w$) von 1 000 bis 2 Millionen, einpolymerisiert enthält, mindestens je eine der Struktureinheiten der allgemeinen Formeln (I) :

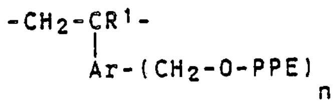

(I)

(II)

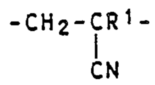

(II)

und

(III)

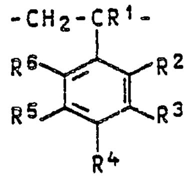

(III)

worin stehen für : $R^1$ = Wasserstoff oder einen Methylrest, Ar = einen gegebenenfalls mit Alkyl- und/oder Arylresten substituierten aromatischen Rest mit 6 bis 14 C-Atomen, PPE = einen gegebenenfalls substituierten Poly (phenylenether) rest mit $\bar{M}_w$ von 500 bis 90 000, n eine ganze Zahl von 1 bis 3, $R^2$ bis $R^6$ = Wasserstoff, $C_1$-$C_8$-Alkyl, Halogen, $—CH_2—Cl$, $—CH_2OH$ oder $—CH_2R^7$ und $R^7$ = für einen organischen oder Phosphororganischen Rest.

2. Thermoplastische Formmasse, dadurch gekennzeichnet, daß sie aus den Komponenten A, B und C besteht.

3. Thermoplastische Formmasse nach Anspruch 1, dadurch gekennzeichnet, daß, jeweils bezogen auf C.

0,01 bis 20 Mol.% der Struktureinheit I
5 bis 50 Mol.% der Struktureinheit II und
40 bis 96 Mol.% der Struktureinheit III

enthalten sind.

4. Thermoplastische Formmasse nach Anspruch 1, dadurch gekennzeichnet, daß der Anteil des Polyphenylenethers (PPE) in der Komponente C 20 bis 80 Gew.% ausmacht (Seitenkettenanteil).

5. Thermoplastische Formmasse nach Anspruch 1, dadurch gekennzeichnet, daß die Komponente C weitere (ethylenisch ungesättigte) Struktureinheiten IV aufweist, die mit den (ethylenisch ungesättigten) Struktureinheiten I, II und III copolymerisierbar sind.

6. Thermoplastische Formmasse nach Anspruch 1, dadurch gekennzeichnet, daß Ar einen Phenylenrest darstellt.

7. Thermoplastische Formmasse nach Anspruch 1, dadurch gekennzeichnet, daß n = 1 ist.

8. Verwendung von Formmassen nach Anspruch 1 zur Herstellung von Formteilen.

9. Formteile aus Formmassen gemäß Anspruch 1.

**Claims**

1. A thermoplastic molding composition containing

A. from 90 to 10 parts by weight of at least one styrene- and acrylonitrile-containing copolymer,

B. from 10 to 90 parts by weight of at least one poly (phenylene ether), and also containing, based on 100 parts by weight of A + B,

C. from 0.1 to 90 parts by weight of at least one copolymer (comb polymer) composed of a main chain and at least one side chain,

wherein the comb polymer, at a weight average molecular weights $\bar{M}_w$ of from 1 000 to 2 million, contains in copolymerized form at least one each of the structural units of the general formulae (I) :

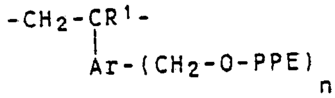
(I)

(II)
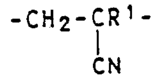
(II)

and

(III)
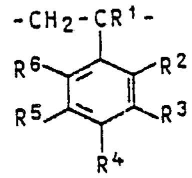
(III)

where $R^1$ is hydrogen or methyl, Ar is an unsubstituted or alkyl- and/or aryl-substituted aromatic radical of from 6 to 14 carbon atoms, PPE is a substituted or unsubstituted poly (phenylene ether) radical of $\bar{M}_w$ from 500 to 90 000, n is an integer from 1 to 3, $R^2$ to $R^6$ are each hydrogen, $C_1$-$C_8$-alkyl, halogen, $—CH_2—Cl$, $—CH_2OH$ or $—CH_2R^7$ and $R^7$ is an organic or organophosphorus radical.

2. A thermoplastic molding composition as claimed in claim 1, comprising components A, B and C.

3. A thermoplastic molding composition as claimed in claim 1, containing, in each case based on C,
from 0.01 to 20 mol% of structural unit I
from 5 to 50 mol% of structural unit II and
from 40 to 96 mol% of structural unit III.

4. A thermoplastic molding composition as claimed in claim 1, wherein the proportion of the polyphenylene ether (PPE) in component C accounts for from 20 to 80 % by weight (side chain content).

5. A thermoplastic molding composition as claimed in claim 1, wherein component C has further (ethylenically unsaturated) structural units IV which are copolymerizable with the (ethylenically unsaturated) structural units I, II and III.

6. A thermoplastic molding composition as claimed in claim 1, wherein Ar is phenylene.

7. A thermoplastic molding composition as claimed in claim 1, wherein n is 1.

8. Use of a molding composition as claimed in claim 1 for producing a molding.

9. A molding from a molding composition as claimed in claim 1.

**Revendications**

1. Masse à mouler thermoplastique, contenant

A. 90 à 10 parties en poids d'au moins un copolymère contenant du styrène et de l'acrylonitrile,

B. 10 à 90 parties en poids d'au moins un poly (oxyphénylène) et contenant en outre, par rapport à 100 parties en poids de A + B,

C. 0,1 à 90 parties en poids d'au moins un copolymère (polymère en dents de peigne) constitué d'une chaîne principale et d'au moins une chaîne latérale,

caractérisée en ce que le polymère en dents de peigne, de masse moléculaire moyenne (moyenne en poids $\bar{M}_w$) de 1 000 à 2 000 000, contient en liaison polymère, les unités structurelles de formules générales (I)

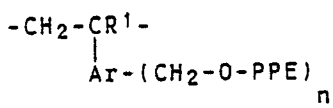
(I)

(II)
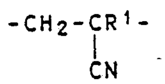
(II)

et

(III)
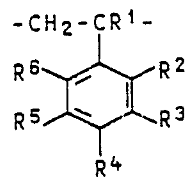
(III)

dans lesquelles $R^1$ est mis pour un atome d'hydrogène ou un reste méthyle, Ar est mis pour un reste aromatique de 6 à 14 atomes de carbone éventuellement substitué par des restes alkyle et/ou aryle, PPE est mis pour un reste poly (oxyphénylène) éventuellement substitué avec une $\bar{M}_w$ de 500 à 90 000, n est mis pour un entier de 1 à 3, $R^2$ à $R^6$ sont mis pour des atomes d'hydrogène, des restes alkyle en $C_1$-$C_8$, des atomes d'halogène ou des restes $—CH_2Cl$, $—CH_2OH$ ou $—CH_2R^7$ et $R^7$ est mis pour un reste organique ou phosphoorganique.

2. Masse à mouler thermoplastique, caractérisée en ce qu'elle est constituée des composants A, B et C.

3. Masse à mouler thermoplastique selon la revendication 1, caractérisée en ce qu'elle contient, à chaque fois par rapport à C,

0,01 à 20 % en moles de l'unité I,
5 à 50 % en moles de l'unité II et
40 à 96 % en moles de l'unité III.

4. Masse à mouler thermoplastique selon la revendication 1, caractérisée en ce que la part de poly (oxyphénylène) (PPE) dans le composant C se monte à 20-80 % en poids (portion chaîne latérale).

5. Masse à mouler thermoplastique selon la revendication 1, caractérisée en ce que le composant C contient d'autres unités structurelles IV (à insaturation éthylénique), qui sont copolymérisables avec les unités structurelles I, II et III (à insaturation éthylénique).

6. Masse à mouler thermoplastique selon la revendication 1, caractérisée en ce que Ar représente un reste phényle.

7. Masse à mouler thermoplastique selon la revendication 1, caractérisée en ce que n = 1.

8. Utilisation d'une masse à mouler thermoplastique selon la revendication 1 pour la préparation d'articles moulés.

9. Articles moulés obtenus à partir de masses à mouler selon la revendication 1.